(19) Europäisches Patentamt
European Patent Office
Office européen des brevets

(11) **EP 3 347 737 B1**

(12) **EUROPÄISCHE PATENTSCHRIFT**

(45) Veröffentlichungstag und Bekanntmachung des Hinweises auf die Patenterteilung:
**28.09.2022 Patentblatt 2022/39**

(21) Anmeldenummer: **16751214.4**

(22) Anmeldetag: **26.07.2016**

(51) Internationale Patentklassifikation (IPC):
**G01S 17/08** (2006.01)    **G01S 13/08** (2006.01)
**G01S 15/08** (2006.01)    **G08G 1/14** (2006.01)
**G01S 13/931** (2020.01)    **G01S 15/931** (2020.01)
**G06V 20/58** (2022.01)    **G08G 1/04** (2006.01)

(52) Gemeinsame Patentklassifikation (CPC):
**G01S 15/931; G01S 13/08; G01S 13/931;**
**G01S 15/08; G01S 17/08; G08G 1/04; G08G 1/143;**
**G08G 1/147;** G01S 2013/9314; G01S 2013/93274;
G01S 2015/934; G01S 2015/935; G01S 2015/937

(86) Internationale Anmeldenummer:
**PCT/EP2016/067730**

(87) Internationale Veröffentlichungsnummer:
**WO 2017/041954 (16.03.2017 Gazette 2017/11)**

(54) **VERFAHREN ZUM ERMITTELN EINER PARKFLÄCHE EINES STRASSENABSCHNITTS**

METHOD FOR DETECTING A PARKING AREA ON A ROAD SECTION

PROCÉDÉ DE DÉTECTION D'UNE AIRE DE STATIONNEMENT D'UNE SECTION DE ROUTE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **11.09.2015 US 201514852089
19.11.2015 DE 102015222800**

(43) Veröffentlichungstag der Anmeldung:
**18.07.2018 Patentblatt 2018/29**

(73) Patentinhaber: **Robert Bosch GmbH
70442 Stuttgart (DE)**

(72) Erfinder:
• **MAYER, Philipp
70176 Stuttgart (DE)**
• **CUNHA, Carlos Eduardo
Palo Alto, CA 94304 (US)**
• **SCHICK, Thorben
37181 Hardegsen (DE)**
• **ABELING, Peter Christian
30171 Hannover (DE)**

(56) Entgegenhaltungen:
EP-A1- 2 234 085    DE-A1-102008 028 763
JP-A- 2009 175 962    JP-B2- 4 705 259
JP-B2- 4 705 259    JP-B2- 4 741 394
JP-B2- 4 741 394    KR-B1- 101 521 842

EP 3 347 737 B1

**Beschreibung**

Die Erfindung betrifft ein Verfahren zum Ermitteln einer Parkfläche wenigstens eines Straßenabschnitts gemäß Anspruch 1. Die Erfindung betrifft ferner eine Vorrichtung zum Ermitteln einer Parkfläche wenigstens eines Straßenabschnitts gemäß Anspruch 6 und ein Computerprogrammprodukt gemäß Anspruch 9.

Stand der Technik

Im Stand der Technik sind verschiedene Verfahren bekannt, Distanzen eines Fahrzeugs zu Objekten mithilfe von distanzbasierten Sensoren (z.B. Ultraschall-, Radar-, Laser-, Video-, Lidarsensoren) zu ermitteln.
Ein Übertragen von Parklückendaten zu einem Server ist beispielsweise aus DE 10 2004 062 021 A1, DE 10 2009 028 024 A1 und DE 10 2008 028 550 A1 bekannt.
JP 4 705 259 B2 offenbart ein Verfahren zum Ermitteln von Fahrbahninformationen. Vorgesehen ist dabei, dass ein Straßenabschnitt mittels eines Ermittlungsfahrzeugs befahren wird und laterale Abstände zu Objekten mittels einer im Ermittlungsfahrzeug angeordneten Ermittlungseinrichtung ermittelt werden.
JP 4 741 394 B2 offenbart ein Verfahren und ein Park-Assistenzsystem zum Ermitteln von verfügbaren Parkflächen für ein Fahrzeug.
EP 2 234 085 (HONDA MOTOR CO LTD), 29.9.2010, offenbart ein Verfahren zur Beurteilung der Parkplatzverfügbarkeit für Fahrzeuge.

Offenbarung der Erfindung

Es ist eine Aufgabe der vorliegenden Erfindung, ein verbessertes Verfahren zum Ermitteln einer Parkfläche eines Straßenabschnitts bereitzustellen.
Gemäß einem ersten Aspekt wird die Aufgabe gelöst mit einem Verfahren zum Ermitteln einer Parkfläche wenigstens eines Straßenabschnitts gemäß Anspruch 1.
Das Verfahren kann vorteilhaft vor allem zum Vervollständigen von unvollständigen Parkraumkarten eingesetzt werden. Falls die gemessene Nutzbreite mit der bekannten, d.h. erwarteten Nutzbreite übereinstimmt, wird daraus geschlossen, dass die Parkfläche belegt ist. Im Ergebnis können dadurch parkende Fahrzeuge zum Erkennen von Parkflächen verwendet werden, wodurch bekannte, ausschließlich auf Erfassung von Parklücken basierende Verfahren bedeutend verbessert sind.
Auf vorteilhafte Weise kann dadurch aufgrund der Kenntnis der Nutzbreite des Straßenabschnitts Parkflächen ermittelt und beispielsweise in Form einer Parkraumkarte bereitgestellt werden. Auf diese Weise ist ein schnelles Erlernen von Parkflächen ermöglicht, wodurch mithilfe einer relativ geringen Zahl von Befahrungen eine vollständige und aktuelle Parkraumkarte erstellt werden kann.
Gemäß einem zweiten Aspekt wird die Aufgabe gelöst mit einer Vorrichtung zum Ermitteln einer Parkfläche wenigstens eines Straßenabschnitts gemäß Anspruch 6.
Bevorzugte Ausführungsformen des Verfahrens sind Gegenstand von abhängigen Ansprüchen.
Eine vorteilhafte Weiterbildung des Verfahrens zeichnet sich dadurch aus, dass im Falle, dass die ermittelten lateralen Abstände definiert von der Nutzbreite abweichen, eine aufgrund eines in einer zweiten Reihe des Straßenabschnitts parkenden Fahrzeugs ermittelte scheinbare Parkfläche verworfen wird. Dadurch können detektierte "falsche" Parkflächen ausgefiltert werden und gehen nicht in die Parkraumkarte ein.
Eine weitere vorteilhafte Weiterbildung des Verfahrens sieht vor, dass im Falle, dass die ermittelten lateralen Abstände definiert von der Nutzbreite abweichen, eine aufgrund eines Fahrzeugs des Gegenverkehrs ermittelte scheinbare Parkfläche verworfen wird. Auch bei Vorhandensein von Gegenverkehr kann somit eine aufgrund des Detektionsmechanismus detektierte "falsche" Parkfläche ausgefiltert werden und geht somit nicht in die Parkraumkarte ein. Im Ergebnis wird dadurch eine Art "Deplausibilisierung von Parkraum" bereitgestellt, die vorteilhaft auch dann funktional ist, wenn die Nutzbreite nicht zwischen an den Straßenrändern geparkten Fahrzeugen repräsentiert ist.
Eine weitere vorteilhafte Weiterbildung des Verfahrens sieht vor, dass im Falle, dass eine Reichweite der Ermittlungseinrichtung nicht die gesamte Nutzbreite abdeckt, eine Position des Fahrzeugs erfasst wird, wobei die erfasste Position mit den ermittelten lateralen Abständen verglichen wird. Auf diese Weise darf für die ordnungsgemäße Funktionalität des Verfahrens die die Nutzbreite des Straßenabschnitts die Sensorreichweite auch überschreiten.
Erfindungsgemäß sieht das Verfahren vor, dass aus den ermittelten Abstandswerten Objekte, insbesondere Fahrzeuge ermittelt werden. Dadurch werden aus den ermittelten Abständen Objekte, insbesondere Fahrzeuge detektiert, die aus definiert ausgebildeten Echos der Ermittlungseinrichtung erfasst werden. Es können auch andere Objekte ermittelt werden, z.B. Litfaßsäulen, Müllcontainer usw., die nicht in die Parkraumkarte einfließen. Im Ergebnis kann dadurch eine Erstellung einer Parkflächenkarte rasch und effizient durchgeführt werden.
Eine weitere vorteilhafte Weiterbildung des Verfahrens sieht vor, dass das Verfahren wenigstens teilweise lokal

2

auf dem Ermittlungsfahrzeug und/oder wenigstens teilweise auf einer Servereinrichtung durchgeführt wird. Auf diese Weise kann eine vorhandene Rechnerkapazität bestmöglich verteilt bzw. ausgenutzt werden.

Eine vorteilhafte Weiterbildung des Verfahrens sieht vor, dass die ermittelten Abstandsdaten automatisiert an die Servereinrichtung übermittelt werden. Auf diese Weise kann auf der Servereinrichtung langfristig eine große historische Datenmenge aggregiert werden, die eine hohe Aktualität und Genauigkeit der Verhältnisse repräsentieren.

Eine weitere vorteilhafte Weiterbildung des Verfahrens sieht vor, dass das Verfahren in Echtzeit während der Befahrung des Straßenabschnitts oder anschließend an die Befahrung in einer Auswertephase durchgeführt wird. Dadurch können vorteilhaft unterschiedliche Auswertestrategien umgesetzt werden.

Eine weitere vorteilhafte Weiterbildung des Verfahrens sieht vor, dass die Befahrungen des Straßenabschnitts in unterschiedlichen Fahrtrichtungen durchgeführt werden, wobei die Ermittlungsdaten der Befahrungen in den unterschiedlichen Fahrtrichtungen korreliert werden. Auf diese Weise kann die Ermittlung der Parkfläche aufgrund der entgegen gerichteten Befahrungen des Straßenabschnitts vorteilhaft noch genauer durchgeführt werden.

Eine weitere vorteilhafte Weiterbildung des Verfahrens zeichnet sich dadurch aus, dass Parkflächen für eine definierte Länge des Straßenabschnitts ermittelt werden. Auf diese Weise können Parkraumkarten für selektiv ausgewählte Bereiche erstellt werden.

Die Erfindung wird im Folgenden mit weiteren Merkmalen und Vorteilen anhand von mehreren Figuren im Detail beschrieben. Dabei bilden alle offenbarten Merkmale, unabhängig von ihrer Rückbeziehung in den Patentansprüchen sowie unabhängig von ihrer Darstellung in der Beschreibung und in den Figuren den Gegenstand der vorliegenden Erfindung. Die Figuren sind insbesondere dazu gedacht, die erfindungswesentlichen Prinzipien zu verdeutlichen.

In den Figuren zeigt:

Fig. 1        eine Prinzipskizze zum Erläutern eines Funktionsprinzips des erfindungsgemäßen Verfahrens;

Fig. 2        eine Prinzipskizze zum Erläutern des Verfahrens;

Fig. 3        eine Prinzipskizze zum Erläutern einer Deplausibilisierung einer scheinbaren Parkfläche aufgrund eines Fahrzeugs in zweiter Spur;

Fig. 4 und 5   Prinzipskizzen zum Erläutern einer Deplausibilisierung einer scheinbaren Parkfläche infolge Gegenverkehr;

Fig. 6        eine Prinzipskizze zum Erläutern eines Erkennens einer Parkfläche;

Fig. 7 und 8   Prinzipskizzen zum Erläutern einer Sensorreichweite; und

Fig. 9        ein Ablaufdiagramm einer Ausführungsform des erfindungsgemäßen Verfahrens.

Beschreibung von Ausführungsformen

Eine sogenannte "Nutzbreite" bzw. "befahrbare Fahrbreite" bzw. "befahrbare Fahrspur" bzw. "reale Straßenbreite" einer Straße bzw. eines Abschnitts davon definiert im Sinne der vorliegenden Erfindung eine physikalische Breite der Straße von Bordsteinkante zu Bordsteinkante abzüglich einer Breite jeweils eines geparkten Fahrzeuges an jedem Straßenrand. Es wird also davon ausgegangen, dass die Nutzbreite nur in denjenigen Bereichen der Straße definiert ist, die von Parkflächen begrenzt ist. Die Nutzbreite wird zu diesem Zweck mit einer Vorfilterung ermittelt, wodurch z.B. Hauswände als begrenzende Elemente des Straßenabschnitts für die Ermittlung der Nutzbreite nicht in Betracht gezogen werden.

Zur Ermittlung der für die vorliegende Erfindung bekannten Nutzbreite werden üblicherweise spezifische Reflexionsmuster von einander abwechselnden Fahrzeugen und Parklücken verwendet. Die Ermittlung der genannten Parklücken ist dabei an eine Erkennung charakteristischer Echobilder gebunden, wobei z.B. jeweils eine Abfolge von parkendem Fahrzeug - Parklücke oder Parklücke - parkendem Fahrzeug vorhanden sein muss, um die Parklücke zu erkennen. Dies erfordert eine umfangreiche Anzahl von Befahrungen des Straßenabschnitts, wobei Bereiche, die einem hohen Parkdruck unterliegen und dadurch sehr selten oder niemals frei sind, nur sehr schwer als Parkfläche ermittelt bzw. verifiziert werden können.

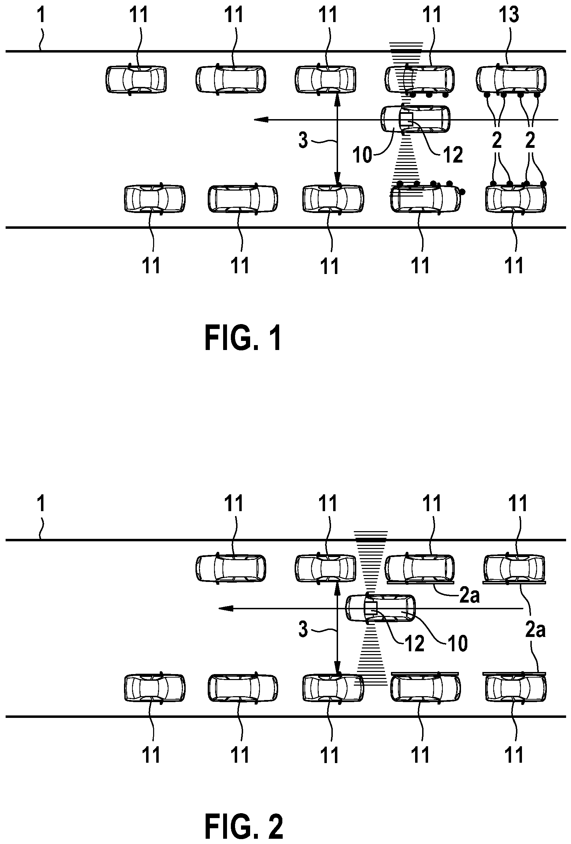

Fig. 1 zeigt ein prinzipielles Funktionsprinzip des vorgeschlagenen Verfahrens zur Ermittlung einer Parkfläche eines Straßenabschnitts. Erkennbar ist ein Ermittlungsfahrzeug 10, welches einen Straßenabschnitt 1 in Pfeilrichtung befährt. An beiden Rändern des Straßenabschnitts 1 sind parkende Fahrzeuge 11 erkennbar, die Parkflächen 13 (von den Fahrzeugen 11 verdeckt) des Straßenabschnitts 1 einnehmen. Das Ermittlungsfahrzeug 10 weist eine Ermittlungseinrichtung 12 zum Erfassen einer Distanz zu lateral in Fahrtrichtung angeordneten Objekten auf, wobei die Ermittlungseinrichtung 12 einen Ultraschallsensor, einen Radarsensor oder einen anderen geeigneten Sensor umfasst.

Der Ermittlungseinrichtung 12 ist, wie bereits erwähnt, eine Nutzbreite 3 des Straßenabschnitts 1 vorab bekannt, wobei eine Art der Ermittlung der Nutzbreite 3 und eine Art der Bereitstellung der Nutzbreite 3 für die Ermittlungseinrichtung 12 letztlich nebensächlich sind. Ferner ist der Ermittlungseinrichtung 12 bekannt, dass der Straßenabschnitt 1 wenigstens auf einer Seite Parkflächen 13 aufweist.

Vorgesehen ist, bei der Befahrung des Straßenabschnitts 1 Abstände zu lateral zum Ermittlungsfahrzeug 10 angeordneten Objekten, vorzugsweise Fahrzeugen 11 zu detektieren und mit der bekannten Nutzbreite 3 abzugleichen. Auf diese Weise werden möglichst viele laterale Distanzen zwischen dem Ermittlungsfahrzeug 10 und den geparkten Fahrzeugen 11 erfasst, wobei seitlich im Wesentlichen in einem rechten Winkel links und rechts des Ermittlungsfahrzeugs 10 wenigstens eine Messung durchgeführt wird. Ein Ergebnis der genannten Ermittlungen liegt in Form von Begrenzungspunkten 2 der Nutzbreite 3 vor, die somit "Abtastpunkte" der Nutzbreite 3 repräsentieren. Die Nutzbreite 3 wird aufgrund von Toleranzschwellen durch einen arithmetischen Mittelwert aus Abständen zwischen den Begrenzungspunkten 2 repräsentiert.

Für den Fall, dass wie in Fig. 1 dargestellt, die gemessene Distanz im Rahmen einer definierten Toleranzschwelle (aufgrund von Mess- bzw. Parkungenauigkeiten) mit der vorbekannten Nutzbreite 3 im Wesentlichen übereinstimmt, wird daraus geschlossen, dass es sich entlang des Straßenabschnitts 1 um verparkte Parkflächen 13 handelt. Auf diese Weise kann innerhalb kurzer Zeit eine vollständige Parkraumkarte erstellt werden, da nicht wie im Stand der Technik üblich, jeweils unbedingt unverparkte Parkflächen 13 ("Parklücken") zur Detektion der Parkflächen 13 erforderlich sind.

Fig. 2 zeigt ein Prinzip des Verfahrens. Erfindungsgemäß werden dabei mittels eines Bearbeitungsschritts aus den gemessenen lateralen Abstandwerten Objekte, vorzugsweise in Form von Fahrzeugen 11 ermittelt bzw. modelliert, was durch eine tangentiale Begrenzungslinien 2a an denjenigen Fahrzeugen 11 angedeutet ist, an denen das Ermittlungsfahrzeug 10 bereits vorbeigefahren ist. Auch in diesem Fall wird die Nutzbreite 3 mit den Abständen zwischen den ermittelten Fahrzeugen 11 verglichen und es kann daraus auf Parkflächen 13 geschlossen werden.

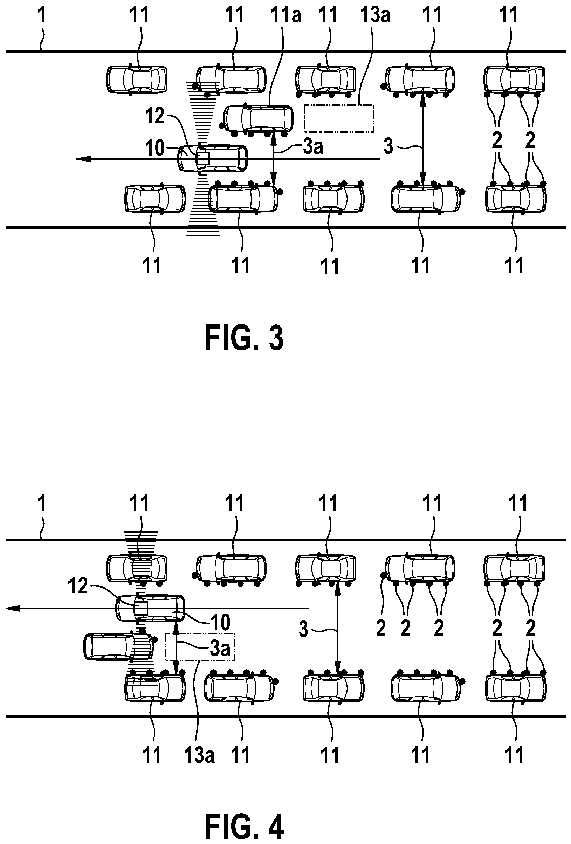

Fig. 3 deutet ein Prinzip einer Deplausibilisierung einer "falschen Parkfläche" 13a an, die in einem Raum hinter einem in zweiter Reihe parkendem Fahrzeug 11a detektiert und für die Parkraumkarte verworfen wird. Zum Ermitteln einer freien Parkfläche 13 benötigt die Ermittlungseinrichtung 12 mindestens ein Objekt vor oder nach der freien Parkfläche 13, um einen Signalübergang zu erzeugen. Dies kann dadurch erreicht werden, dass eine aktuell gemessene Nutzbreite 3a zwischen dem in der zweiten Reihe parkenden Fahrzeug 11a und dem gegenüberliegenden Fahrzeug 11 und der vorbekannten Nutzbreite 3 deutlich unterschiedlich ist. Auch hier erfolgt also ein Abgleich der aktuell gemessenen Nutzbreite 3a mit der vorab bekannten Nutzbreite 3, wodurch falscher Parkraum verworfen, getaggt oder sonstwie ungültig markiert und somit nicht in die Parkraumkarte aufgenommen wird.

Dies kann, wie in Fig. 4 angedeutet, in analoger Weise auch bei einem einzelnen Fahrzeug des Gegenverkehrs erfolgen, wobei das einzelne Fahrzeug des Gegenverkehrs und das Ermittlungsfahrzeug 10 mit definiert geringer Relativgeschwindigkeit (z.B. ca. 45 km/h) aneinander vorbeifahren. Eine Festlegung der genannten Relativgeschwindigkeit kann auf einfache Weise mit geeigneten Software-Algorithmen erfolgen bzw. angepasst werden. Auch in diesem Fall erfolgt keine Detektion einer falschen Parkfläche 13a, die damit verworfen und nicht in die Parkraumkarte eingeht.

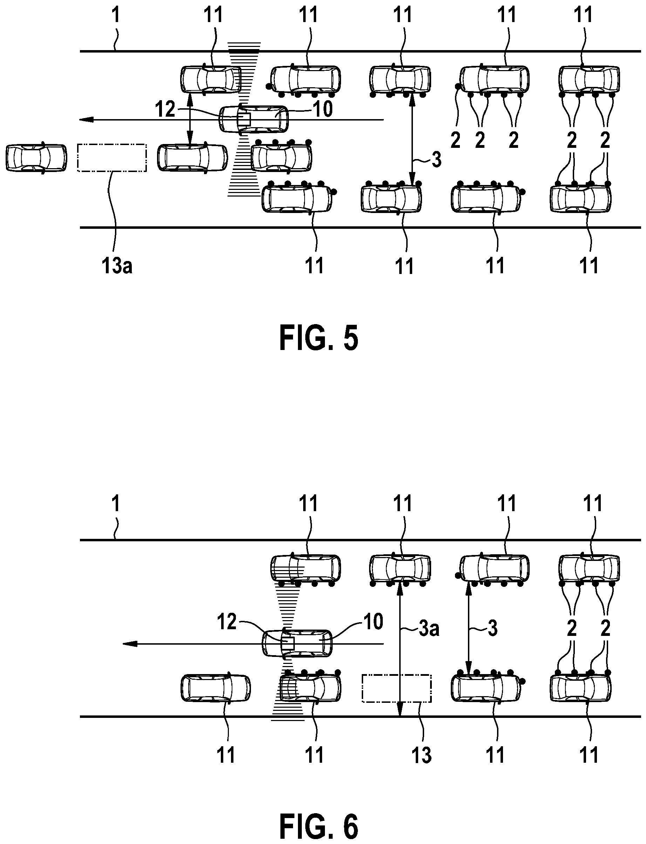

Fig. 5 entspricht im Wesentlichen Fig. 4, wobei in diesem Fall ein Szenario bei fließendem Gegenverkehr dargestellt ist, wobei zwischen zwei einzelnen Fahrzeugen des Gegenverkehrs eine größere Lücke auftritt, die als falsche Parkfläche 13a erkannt und für die Parkraumkarte verworfen bzw. deplausibilisiert wird.

Fig. 6 zeigt einen "positiven Vergleich" zwischen der bekannten Nutzbreite 3 und der aktuell gemessenen Nutzbreite 3a, wobei die aktuell gemessene Nutzbreite 3a größer ist als die bekannte Nutzbreite 3 und deshalb eine Parkfläche 13 erkannt bzw. validiert wird.

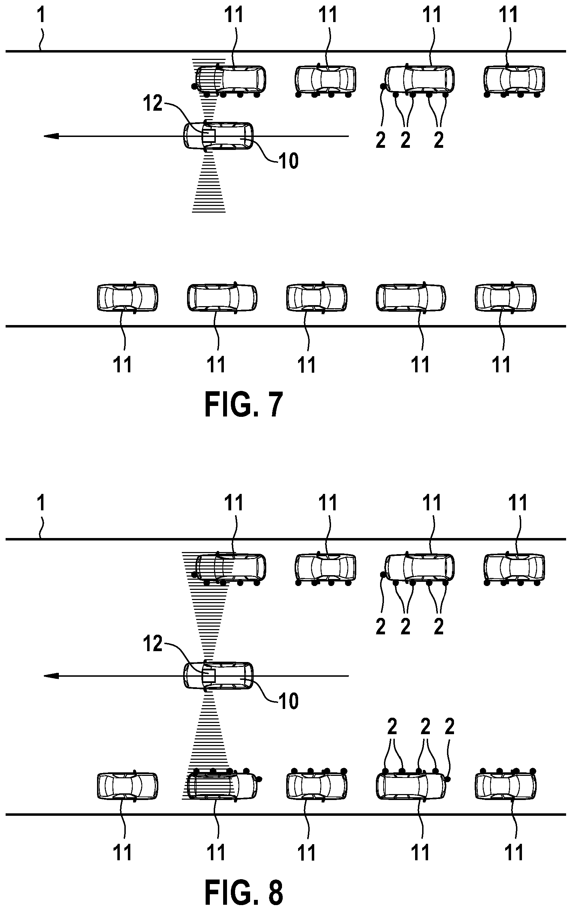

Fig. 7 zeigt ein Szenario, in welchem eine Reichweite der Ermittlungseinrichtung 12 auf der linken Seite des Ermittlungsfahrzeugs 10 nicht ausreicht, um die Distanzen zu den Fahrzeugen 11 zu ermitteln. Somit können mittels der Ermittlungseinrichtung 12 nur die Begrenzungspunkte 2 rechts vom Ermittlungsfahrzeug 10 ermittelt werden. In diesem Fall kann zusätzlich eine Positionserfassungseinrichtung (z.B. eine GPS-Positionserfassungseinrichtung) verwendet werden, um eine im cm-Bereich genaue Position des Ermittlungsfahrzeugs 10 zu bestimmen und auf diese Weise Abstände zu den lateral angeordneten Fahrzeugen 11 zu ermitteln. Für die maximale Soll-Reichweite $d_{max}$ der Ermittlungseinrichtung 12 gilt:

$$d_{max} = 2 \times \text{maximale Sensorreichweite} + \text{Breite des Ermittlungsfahrzeugs}$$

Falls mittels der Ermittlungseinrichtung 12 die genannte Soll-Reichweite $d_{max}$ nicht erreicht wird, kann kein Abgleich mit der vorbekannten Nutzbreite 3 vorgenommen werden und es muss zusätzlich die genannte Positionserfassungseinrichtung verwendet werden.

Fig. 8 deutet an, dass mithilfe einer anderen Sensortechnologie eine Reichweite der Ermittlungseinrichtung 12 erhöht wird, um dadurch die lateralen Messungen durchführen zu können. Auf diese Weise können, wie vorgesehen, die Begrenzungspunkte 2 zu beiden Seiten des Ermittlungsfahrzeugs 10 ermittelt werden. Je nach verwendeter Sensortechnologie der Ermittlungseinrichtung 12 kann eine unterschiedliche Sensorreichweite der Ermittlungseinrichtung 12 genutzt werden, wodurch in Abhängigkeit von der verwendeten Technologie unterschiedliche Nutzbreiten 3 ermittelbar sind.

Die genannten Ermittlungen der lateralen Distanzen mit der Ermittlung der Parkflächen 13 bzw. die Deplausibilisierung der falschen Parkflächen 13a können sowohl lokal auf der Ermittlungseinrichtung 12 als auch auf einer dezentralen Servereinrichtung (nicht dargestellt) durchgeführt werden. Beispielsweise können eine Echtzeitverarbeitung oder eine Bearbeitung im Nachgang zu durchgeführten Befahrungen vorgesehen sein. Eine für die Verarbeitung auf der Servereinrichtung erforderliche Kommunikationseinrichtung zur drahtgebundenen oder drahtlosen Kommunikation der Ermittlungseinrichtung 12 mit der Servereinrichtung ist nicht dargestellt.

Die Genauigkeit und die Verlässlichkeit der Ermittlung der Parkflächen 13 nimmt mit der Anzahl an Durchfahrten durch den jeweiligen Straßenabschnitt 1 zu, da dann die Mittelung mit einer erhöhten Anzahl an Messwerten durchgeführt wird.

Vorteilhaft kann die Ermittlung der Parkfläche 13 bereits am Ermittlungsfahrzeug 10 selbst, zum Beispiel mittels der Ermittlungseinrichtung 12 oder eines dafür vorgesehenen Steuergeräts durchgeführt werden. Es ist alternativ oder zusätzlich auch denkbar, dass sämtliche erfassten Daten mittels einer nicht dargestellten funkbasierten Kommunikationseinrichtung (z.B. basierend auf GSM, EDGE, UMTS, LTE, WLAN, usw.) des Ermittlungsfahrzeugs 10 an eine Servereinrichtung übermittelt werden, wobei in diesem Fall die Ermittlung der Parkfläche 13 von der in der Regel wesentlich leistungsstärkeren Servereinrichtung durchgeführt wird.

Vorzugweise kann vorgesehen sein, die Parkflächen 13 über einen frei definierbaren Straßenabschnitt 1 zu ermitteln.

Vorzugweise kann auch vorgesehen sein, dass die beschriebenen Messungen auch in einer zweiten Fahrtrichtung des Straßenabschnitts 1 durchgeführt werden und mit den Messwerten der ersten Fahrtrichtung durchgeführten Befahrung des Straßenabschnitts 1 korreliert bzw. abgeglichen werden (nicht dargestellt). Auf diese Weise kann eine Datenqualität der Parkflächen 13 bzw. eine Genauigkeit der daraus erstellten Parkraumkarte noch weiter verbessert werden.

Vorteilhaft kann das Verfahren mit unterschiedlichen Sensortechnologien realisiert werden, z.B. mit Ultraschall- oder Radarsensoren, wodurch wirtschaftliche Aspekte berücksichtigt werden können.

Vorzugweise wird das Verfahren als eine Software implementiert, wodurch eine leichte Adaptierbarkeit bzw. Aktualisierbarkeit des Verfahrens unterstützt ist.

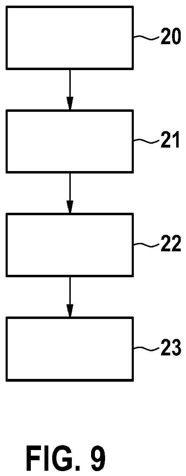

Fig. 9 zeigt ein prinzipielles Ablaufdiagramm einer Ausführungsform des erfindungsgemäßen Verfahrens:
In einem Schritt 20 wird eine Nutzbreite 3 des Straßenabschnitts 1 bereitgestellt, wobei die Nutzbreite 3 eine befahrbare Breite des Straßenabschnitts 1 zwischen parkenden Fahrzeugen 11 repräsentiert.

In einem Schritt 21 werden ein Befahren des Straßenabschnitts 1 mittels eines Ermittlungsfahrzeugs 10 und ein Ermitteln von lateralen Abständen zu Objekten mittels einer im Ermittlungsfahrzeug 10 angeordneten Ermittlungseinrichtung 12 durchgeführt.

In einem Schritt 22 wird ein Vergleichen der ermittelten lateralen Abstände mit der Nutzbreite 3 durchgeführt.

In einem Schritt 23 wird die Parkfläche 13 mittels des Vergleichens ermittelt.

Zusammenfassend werden mit der vorliegenden Erfindung ein Verfahren und eine Vorrichtung zur Ermittlung einer Parkfläche eines Straßenabschnitts vorgeschlagen. Im Ergebnis wird dabei eine Art "Data-Mining" durchgeführt, welches während der Fahrt einen fortwährenden Vergleich einer ermittelten Nutzbreite mit einer vorbekannten Nutzbreite durchführt. Im Ergebnis sind dadurch Parkraumkarten effizient und qualitativ hochwertig erstellbar. Vorteilhaft können zum Erkennen der Parkflächen Parkflächen auch im verparkten Zustand verwendet werden und müssen zu ihrer Detektion nicht jeweils in unverparktem Zustand vorliegen.

## Patentansprüche

1. Verfahren zum Ermitteln einer freien oder einer belegten Parkfläche (13) wenigstens eines Straßenabschnitts (1), aufweisend die Schritte:

   - Befahren des Straßenabschnitts (1) mittels eines Ermittlungsfahrzeugs (10) in einer Fahrtrichtung,
   - Ermitteln von lateralen Abständen zwischen Objekten, die als Fahrzeuge ausgebildet sind, wobei die Fahrzeuge lateral zur Fahrtrichtung des Ermittlungsfahrzeuges angeordnet sind, und dem Ermittlungsfahrzeug (10) mittels einer im Ermittlungsfahrzeug (10) angeordneten Ermittlungseinrichtung (12), **gekennzeichnet durch** die folgenden Schritte:
   - die Ermittlungseinrichtung (12) kennt vorab eine Nutzbreite (3) des Straßenabschnitts (1), wobei die Nutzbreite (3) eine befahrbare Breite des Straßenabschnitts (1) zwischen an beiden Rändern des Straßenabschnittes (1) parkenden Fahrzeugen (11) repräsentiert;
- wobei der Ermittlungseinrichtung (12) bekannt ist, dass der Straßenabschnitt (1) auf beiden Seiten Parkflächen (13) aufweist, und
- ein Vergleichen der ermittelten lateralen Abstände mit der Nutzbreite (3); und
- ein Ermitteln der belegten oder der freien Parkfläche (13) mittels des Vergleichens,
- wobei das Verfahren zum Vervollständigen von unvollständigen Parkraumkarten eingesetzt wird, wobei, falls die in Form des gemessenen lateralen Abstandes gemessene Nutzbreite mit der bekannten Nutzbreite übereinstimmt, daraus geschlossen wird, dass die Parkfläche belegt ist, wobei dadurch parkende Fahrzeuge zum Erkennen von Parkflächen verwendet werden, oder

wobei freie Parkflächen, so genannte Parklücken, an eine Erkennung charakteristischer Echobilder gebunden ist, wobei jeweils eine Abfolge von parkendem Fahrzeug - Parklücke oder Parklücke - parkendem Fahrzeug vorhanden sein muss, um die freie Parkfläche zu erkennen.

2. Verfahren nach Anspruch 1, wobei die lateralen Distanzen zwischen dem Ermittlungsfahrzeug (10) und den geparkten Fahrzeugen (11) erfasst werden, indem wenigstens eine Messung seitlich im Wesentlichen in einem rechten Winkel links und rechts des Ermittlungsfahrzeugs (10) durchgeführt wird, wobei im Falle, dass die ermittelten lateralen Abstände definiert von der Nutzbreite (3) abweichen, eine aufgrund eines in einer zweiten Reihe des Straßenabschnittes (1) parkenden Fahrzeugs (11a) ermittelte scheinbare Parkfläche (13a) verworfen wird.

3. Verfahren nach Anspruch 1, wobei die lateralen Distanzen zwischen dem Ermittlungsfahrzeug (10) und den geparkten Fahrzeugen (11) erfasst werden, indem wenigstens eine Messung seitlich im Wesentlichen in einem rechten Winkel links und rechts des Ermittlungsfahrzeugs (10) durchgeführt wird, wobei im Falle, dass die ermittelten lateralen Abstände definiert von der Nutzbreite (3) abweichen, eine aufgrund eines Fahrzeugs (11a) des Gegenverkehrs ermittelte scheinbare Parkfläche (13a) verworfen wird.

4. Verfahren nach einem der vorhergehenden Ansprüche, wobei das Verfahren wenigstens teilweise lokal auf dem Ermittlungsfahrzeug (10) und/oder wenigstens teilweise auf einer Servereinrichtung durchgeführt wird.

5. Verfahren nach einem der vorhergehenden Ansprüche, wobei das Verfahren in Echtzeit während der Befahrung des Straßenabschnitts (1) oder anschließend an die Befahrung des Straßenabschnitts (1) in einer Auswertephase durchgeführt wird.

6. Vorrichtung (10,12) zum Ermitteln einer freien oder einer belegten Parkfläche (13) wenigstens eines Straßenabschnitts (1), aufweisend ein Ermittlungsfahrzeug (10) mit einer Ermittlungseinrichtung (12), wobei mittels der Ermittlungseinrichtung (12) laterale Abstände zwischen Objekten, die lateral zur Fahrtrichtung des Ermittlungsfahrzeuges (10) angeordnet sind, und dem Ermittlungsfahrzeug (10) ermittelbar sind, **dadurch gekennzeichnet, dass** der Vorrichtung (10,12) vorab eine Nutzbreite (3) des Straßenabschnitts (1) in Form einer befahrbaren Breite des Straßenabschnitts (1) zwischen an beiden Rändern des Straßenabschnittes parkenden Fahrzeugen (11) bekannt ist, wobei der Ermittlungseinrichtung (12) bekannt ist, dass der Straßenabschnitt (1) auf beiden Seiten Parkflächen (13) aufweist, und wobei aus einem Vergleich der ermittelten lateralen Abstände mit der Nutzbreite (3) eine freie oder eine belegte Parkfläche (13) ermittelbar ist, wobei die Ermittlungseinrichtung (12) ausgebildet ist, ein Verfahren gemäß einem der vorhergehenden Ansprüche auszuführen.

7. Vorrichtung nach Anspruch 6, wobei das Ermittlungsfahrzeug (10) eine Kommunikationseinrichtung zum Übermitteln von Daten der Ermittlungseinrichtung (12) an eine Servereinrichtung aufweist.

8. Vorrichtung nach Anspruch 6 oder 7, wobei die Ermittlungseinrichtung (12) einen Ultraschallsensor oder einen Radarsensor aufweist.

9. Computerprogrammprodukt mit Programmcodemitteln zum Ausführen des Verfahrens nach einem der Ansprüche 1 bis 5, wenn es auf einem computerlesbaren Datenträger abgespeichert ist oder auf einer Ermittlungseinrichtung (12) abläuft.

**Claims**

1. Method for detecting a free or occupied parking area (13) on at least one road section (1), including the steps of:

   - travelling along the road section (1) by means of a detection vehicle (10) in a direction of travel,
   - determining lateral distances between objects which are in the form of vehicles, wherein the vehicles are arranged laterally with respect to the direction of travel of the detection vehicle, and the detection vehicle (10) by means of a determination device (12) arranged in the detection vehicle (10), **characterized by** the following steps:
   - the determination device (12) knows in advance a usable width (3) of the road section (1), wherein the usable width (3) represents a drivable width of the road section (1) between vehicles (11) parked on both sides of the road section (1);
   - wherein the determination device (12) knows that the road section (1) has parking areas (13) on both sides; and
   - comparing the determined lateral distances to the usable width (3); and
   - detecting the occupied or free parking area (13) by means of the comparison,
   - wherein the method is used to complete incomplete parking space maps, wherein, if the usable width measured in the form of the measured lateral distance matches the known usable width, it is inferred that the parking area is occupied, wherein as a result parked vehicles are used to identify parking areas, or

   wherein free parking areas, so-called parking spaces, are linked to identification of characteristic echo images, wherein a sequence of parked vehicle-parking space or parking space-parked vehicle must be present in each case in order to identify the free parking area.

2. Method according to Claim 1, wherein the lateral distances between the detection vehicle (10) and the parked vehicles (11) are detected by carrying out at least one measurement laterally, essentially at a right angle to the left and to the right of the detection vehicle (10), wherein, in the case that the determined lateral distances deviate from the usable width (3) in a defined manner, an apparent parking area (13a) which is detected due to a vehicle (11a) parked in a second row of the road section (1) is discarded.

3. Method according to Claim 1, wherein the lateral distances between the detection vehicle (10) and the parked vehicles (11) are detected by carrying out at least one measurement laterally, essentially at a right angle to the left and to the right of the detection vehicle (10), wherein, in the case that the determined lateral distances deviate from the usable width (3) in a defined manner, an apparent parking area (13a) which is detected due to a vehicle (11a) in oncoming traffic is discarded.

4. Method according to one of the preceding claims, wherein the method is carried out at least partially locally in the detection vehicle (10) and/or at least partially on a server device.

5. Method according to one of the preceding claims, wherein the method is carried out in real time during the journey along the road section (1), or subsequently to the journey along the road section (1), in an evaluation phase.

6. Device (10, 12) for detecting a free or occupied parking area (13) on at least one road section (1), including a detection vehicle (10) having a determination device (12), wherein lateral distances between objects, which are arranged laterally with respect to the direction of travel of the detection vehicle (10), and the detection vehicle (10) are able to be determined by means of the determination device (12), **characterized in that** a usable width (3) of the road section (1) in the form of a drivable width of the road section (1) between vehicles (11) parked on both sides of the road section is known to the device (10, 12) in advance, wherein the determination device (12) knows that the road section (1) has parking areas (13) on both sides, and wherein a free or occupied parking area (13) is able to be detected from a comparison of the determined lateral distances to the usable width (3), wherein the determination device (12) is designed to carry out a method according to one of the preceding claims.

7. Device according to Claim 6, wherein the detection vehicle (10) includes a communication device for transmitting data of the determination device (12) to a server device.

8. Device according to Claim 6 or 7, wherein the determination device (12) includes an ultrasonic sensor or a radar sensor.

9. Computer program product including program code means for carrying out the method according to one of Claims 1 to 5, if it is stored on a computer-readable data carrier or runs on a determination device (12).

**Revendications**

1. Procédé permettant de détecter une place de stationnement (13) libre ou occupée d'au moins un segment de rue (1), présentant les étapes consistant à :

   - parcourir le segment de rue (1) au moyen d'un véhicule de détection (10) dans un sens de la marche,
   - détecter des distances latérales entre des objets qui sont réalisés sous forme de véhicules, les véhicules étant disposés latéralement par rapport au sens de la marche du véhicule de détection, et le véhicule de détection (10) au moyen d'un dispositif de détection (12) disposé sur le véhicule de détection (10),

   **caractérisé par** les étapes suivantes :

   - le dispositif de détection (12) connaît à l'avance une largeur utile (3) du segment de rue (1), la largeur utile (3) représentant une largeur praticable du segment de rue (1) entre des véhicules (11) en stationnement aux deux bords du segment de rue (1) ;
   - le dispositif de détection (12) sachant que le segment de rue (1) présente des places de stationnement (13) des deux côtés, et
   - une comparaison des distances latérales détectées avec la largeur utile (3) ; et
   - une détection de la place de stationnement (13) occupée ou libre au moyen de la comparaison,
   - le procédé étant mis en œuvre pour compléter des cartes d'espace de stationnement incomplètes, dans lequel, si la largeur utile mesurée sous la forme de la distance latérale mesurée coïncide avec la largeur utile connue, on en conclut que la place de stationnement est occupée,
   dans lequel des véhicules en stationnement sont ainsi utilisés pour reconnaître des places de stationnement, ou dans lequel des places de stationnement libres, appelées créneaux, sont liées à une reconnaissance d'échogrammes caractéristiques, dans lequel respectivement une série de véhicule en stationnement/créneau ou créneau/ véhicule en stationnement doit exister pour reconnaître la place de stationnement libre.

2. Procédé selon la revendication 1, dans lequel les distances latérales entre le véhicule de détection (10) et les véhicules en stationnement (11) sont acquises en ce qu'au moins une mesure est effectuée latéralement, substantiellement à angle droit à gauche et à droite du véhicule de détection (10), dans lequel, dans le cas où les distances latérales détectées s'écarteraient de manière définie de la largeur utile (3), une place de stationnement apparente (13a) détectée sur la base d'un véhicule (11a) en stationnement dans une deuxième rangée du segment de rue (1) serait rejetée.

3. Procédé selon la revendication 1, dans lequel les distances latérales entre le véhicule de détection (10) et les véhicules en stationnement (11) sont acquises en ce qu'au moins une mesure est effectuée latéralement substantiellement à angle droit à gauche et à droite du véhicule de détection (10), dans lequel, dans le cas où les distances latérales détectées s'écarteraient de manière définie de la largeur utile (3), une place de stationnement apparente (13a) détectée sur la base d'un véhicule (11a) du trafic en sens inverse serait rejetée.

4. Procédé selon l'une quelconque des revendications précédentes, dans lequel le procédé est effectué au moins en partie localement sur le véhicule de détection (10) et/ou au moins en partie sur un dispositif serveur.

5. Procédé selon l'une quelconque des revendications précédentes, dans lequel le procédé est effectué en temps réel pendant que le segment de rue (1) est parcouru ou suite au parcours du segment de rue (1) dans une phase d'évaluation.

6. Dispositif (10, 12) permettant de détecter une place de stationnement (13) libre ou occupée d'au moins un segment de rue (1), présentant un véhicule de détection (10) doté d'un dispositif de détection (12), le dispositif de détection (12) permettant de détecter des distances latérales entre des objets qui sont disposés latéralement par rapport au sens de la marche du véhicule de détection (10) et le véhicule de détection (10),
   **caractérisé en ce que** le dispositif (10, 12) connaît à l'avance une largeur utile (3) du segment de rue (1) sous la forme d'une largeur praticable du segment de rue (1) entre des véhicules en stationnement (11) aux deux bords du segment de rue, le dispositif de détection (12) sachant que le segment de rue (1) présente des places de stationnement (13) des deux côtés, et dans lequel une place de stationnement (13) libre ou occupée peut être détectée à partir d'une comparaison des distances latérales détectées avec la largeur utile (3), le dispositif de détection (12) étant réalisé pour exécuter un procédé selon l'une quelconque des revendications précédentes.

7. Dispositif selon la revendication 6, dans lequel le véhicule de détection (10) présente un dispositif de communication pour transmettre des données du dispositif de détection (12) à un dispositif serveur.

8. Dispositif selon la revendication 6 ou 7, dans lequel le dispositif de détection (12) présente un capteur à ultrasons ou un capteur radar.

9. Produit de programme informatique comprenant des moyens de code programme pour exécuter le procédé selon l'une quelconque des revendications 1 à 5 lorsqu'il est stocké sur un support de données lisible par ordinateur ou est exécuté sur un dispositif de détection (12).

1    11         11         11         11         13

3

10         12

2    2

11         11         11         11         11

## FIG. 1

1              11         11         11         11

2a

3

12    10

2a

11         11         11         11         11

## FIG. 2

**FIG. 3**

**FIG. 4**

FIG. 5

FIG. 6

**FIG. 7**

**FIG. 8**

**FIG. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004062021 A1
- DE 102009028024 A1
- DE 102008028550 A1
- JP 4705259 B
- JP 4741394 B
- EP 2234085 A